Europäisches Patentamt

European Patent Office

Office européen des brevets

(11) Publication number: **0 193 923**
**B1**

(12) **EUROPEAN PATENT SPECIFICATION**

(45) Date of publication of patent specification: **23.11.89**

(51) Int. Cl.⁴: **G 21 C 3/32**

(21) Application number: **86102798.5**

(22) Date of filing: **04.03.86**

(54) **Universal fuel assembly construction for a nuclear reactor.**

(30) Priority: **04.03.85 US 708190**
**26.03.85 US 716282**

(43) Date of publication of application:
**10.09.86 Bulletin 86/37**

(45) Publication of the grant of the patent:
**23.11.89 Bulletin 89/47**

(84) Designated Contracting States:
**BE DE FR GB IT SE**

(56) References cited:
**EP-A-0 049 667**
**GB-A-1 148 881**
**US-A-3 389 056**
**US-A-3 791 466**
**US-A-3 828 868**
**US-A-4 059 484**

(73) Proprietor: **WESTINGHOUSE ELECTRIC CORPORATION**
**Westinghouse Building Gateway Center**
**Pittsburgh Pennsylvania 15222 (US)**

(72) Inventor: **Demario, Edmund Emory**
**2816 Orlando Drive**
**Pittsburgh Pennsylvania 15235 (US)**
Inventor: **Burman, Denis Leroy**
**1337 Hillsdale Drive**
**Monroeville Pennsylvania 15146 (US)**
Inventor: **Olson, Carl Adelbert**
**1328 Hillsdale Drive**
**Monroeville Pennsylvania 15146 (US)**
Inventor: **Secker, Jeffrey Robert**
**4309 Stonecliffe Drive**
**Monroeville Pennsylvania 15146 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to nuclear reactors and, more particularly, to a fuel assembly therefor.

A typical pressurized-water nuclear reactor contains a large number of fuel assemblies in its core. The fuel assemblies are substantially identical to each other except for their fuel enrichment. In order to optimize the fuel burnup and smooth the radial neutron flux profile across the reactor core, it has been customary to employ a zoned enrichment pattern, which means that fuel contained in assemblies located in regions nearer to the periphery of the core is somewhat more enriched than fuel contained in assemblies located in regions nearer to the center of the core. After a given core cycle, such as a year, fuel assemblies in a core region of higher enrichment are shuffled into a lower enrichment region, while new fuel assemblies are added to the highest enrichment region, and depleted or burned-out assemblies are removed from the lowest enrichment region.

Except for their variations in fuel enrichment, all of the fuel assemblies in the reactor core have the same construction, each fuel assembly basically comprising a bottom nozzle, a top nozzle, an instrumentation tube, and pluralities of control-rod guide thimbles, fuel rods, and grids. For instance, in a typical fuel assembly, the fuel rods may be arranged in a square array with 17 rod locations per side. Of the total 289 rod locations per assembly, 264 locations contain fuel rods. In addition, there are 24 guide thimbles and 1 instrumentation tube location.

The structural skeleton of a conventional fuel assembly, such as the one shown in US-A-3 791 466, consists of its bottom and top nozzles, and of the guide thimbles which extend vertically between the bottom and top nozzles and rigidly interconnect them. In addition to their shared function of providing a rigid skeleton, each of these components performs other functions. Thus, the bottom nozzle directs upwardly flowing reactor coolant into the fuel assembly; the guide thimble's provide channels through the fuel assembly for insertion of control rods therein; and the top nozzle provides a platform for the spider assembly supporting the control rods. The top nozzle also has openings permitting the coolant to flow therethrough, and the bottom and top nozzles together prevent downward and upward ejection of the fuel rods from the fuel assembly.

In conventional fuel assemblies, the grids and fuel rods are not structural parts of the fuel assembly skeleton but rather are supported directly and indirectly respectively, by the guide thimbles. The grids are attached to the guide thimbles at axially spaced locations, and the fuel rods are laterally supported in an organized array by the transverse grids, as well known in the art.

The guide thimbles of a fuel assembly are larger in diameter than the fuel rods and, as mentioned above, provide channels adapted to receive various types of control rods such as used in controlling the reactivity of the nuclear fuel. However, the guide thimbles of fuel assemblies to be used in core location where there are no control rods cannot be utilized ordinarily to accommodate fuel rods since fuel rods placed within such guide thimbles would not leave enough space for sufficient coolant to flow therethrough to prevent overheating of the fuel rods.

Thus, a conventional fuel assembly has a significant number of its rod locations (about ten percent in the above example) dedicated to non-fuel use. Moreover, since not all fuel assemblies in a reactor core require control rods (about two-thirds of the fuel assemblies in a typical core do not), non-fuel rod locations in many regions of the core go unused which results in lower power output, increased fuel cycle costs, reduced fuel assembly life and a sub-optimum fuel loading configuration. Conventional fuel assemblies relying upon the guide thimbles to join the end nozzles together and to provide a rigid skeleton of high structural integrity have an additional drawback insofar as the large number of thimbles renders more difficult the removal and remounting of the top nozzle such as necessary when a fuel assembly is to be reconstituted.

It is the principal object of the invention to provide an improved fuel assembly design which alleviates the above-mentioned problems without sacrificing structural integrity, and which, furthermore, allows greater flexibility in tailoring the fuel content of the fuel assembly to the particular location at which the fuel assembly is to be used within a reactor core.

The invention accordingly resides in a nuclear fuel assembly as defined in claim 1.

If the fuel assembly is for use at a reactor core location employing control rods, at least some of the elongate elements of the cluster assembly, namely, as many as are needed to accommodate the control rods, are control-rod guide thimbles. On the other hand, if the fuel assembly is to be employed at a reactor core location where there are no control rods, the elongate elements of the cluster assembly can be fuel rods to be used in the channels which otherwise would be left empty in the absence of control rods.

Thus, the fuel assembly embodying the invention, instead of relying upon control-rod guide thimbles for structural integrity of the skeleton, employs the elongate members, preferably hollow posts, which are not required to serve as guide tubes; and it employs the cluster assembly which includes control-rod guide thimbles and/or fuel rods, depending upon the core location at which the fuel assembly is to be used, and which is removably supported from the upper end structure so as to be easily installed and removed. It will be appreciated that this arrangement affords considerable flexibility in tailoring the fuel content of the fuel assembly to the particular location at which the latter is to be employed within the reactor core. In addition, the skeletal structure of the fuel assembly is composed of parts which can be assembled and disassembled easily since the main structural support is provided by the elongate members, preferably four corner posts, which are detachable from the top and bottom nozzle. This permits damaged fuel rods and grids to be replaced so that no fuel assemblies need be discarded prematurely. When the fuel of the assembly is finally spent, complete disassembly of the fuel assembly allows compact storage in a spent fuel pit. Furthermore, since the guide thimbles are no longer structural members, they can be readily removed, if not needed to guide control rods, and replaced with fuel rods or the like. Such replacement can be used to reduce fuel cycle costs, extend the life of burned fuel assemblies, optimize loading patterns giving peaking factor reduction, adjust the cycle length late in analysis and increase the capability for longer cycles.

A preferred embodiment of the invention will now be described, by way of example only, with reference to the accompanying drawings, in which:

Figure 1 is an elevational view, partly in section, of a nuclear reactor fuel assembly embodying the invention, and of a conventional control rod spider assembly shown in phantom outline;

Figure 2 is an enlarged sectional view of the top nozzle of the fuel assembly, taken along line 2-2 of Figure 1;

Figure 3 is an enlarged top plan view of the fuel rods and the uppermost grid of the fuel assembly, as seen when viewed in the direction of the arrows on line 3-3 of Figure 1;

Figure 4 is an enlarged, fragmentary plan view of the cell of the grid of Figure 3 containing the lower right-hand corner post;

Figure 5 is a fragmentary sectional view of the corner post and the associated grid cell, as taken along line 5-5 of Figure 4;

Figure 6 is a view similar to Figure 5 but taken along line 6-6 of Figure 4;

Figure 7 is an enlarged, top plan view of the top nozzle and the cluster plate of the fuel assembly as seen when viewed in the direction of the arrows on line 7-7 of Figure 1;

Figure 7a is an enlarged, fragmentary sectional view of the cluster plate and top nozzle, as taken along line 7a-7a of Figure 7;

Figure 7b is another enlarged, fragmentary sectional view of the cluster plate and top nozzle, as taken along line 7b-7b of Figure 7;

Figure 8 is a sectional view of the cluster assembly as taken along line 8-8 of Figure 7;

Figure 9 is a sectional view of another cluster assembly having a cluster plate which supports a plurality of fuel rods and an instrumentation tube;

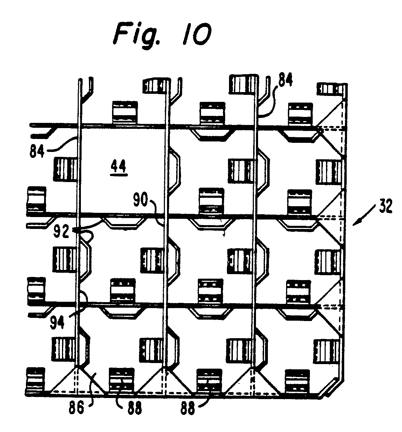

Figure 10 is an enlarged, fragmentary top plan view of the lowermost grid of the fuel assembly, as taken along line 10-10 of Figure 1 and with the fuel rods, guide thimbles and corner post omitted; and

Figure 11 is a diagrammatic representation of a quarter of the reactor core, illustrating cluster assemblies with fresh fuel installed in burned fuel assemblies and cluster assemblies with burned fuel installed in fresh fuel assemblies.

In the following description, like reference characters designate like or corresponding parts throughout the several views of the drawings, and terms, such as "forward", "rearward", "left", "right", "upwardly", "downwardly", and the like, are employed as words of convenience not to be construed as limiting terms.

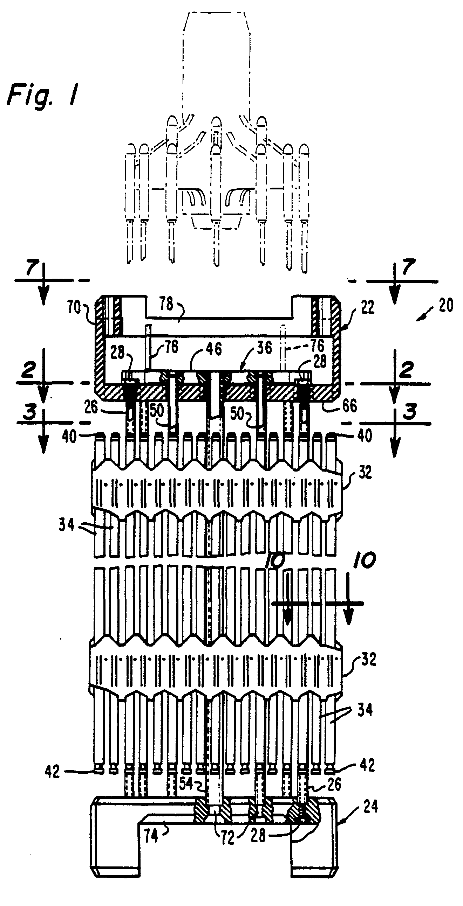

Referring now to the drawings, and particularly to Figure 1, the fuel assembly illustrated therein in vertically foreshortened form and generally designated with reference numeral 20 is designed for use in a pressurized water reactor (PWR). Basically, it comprises an upper end structure in the form of a top nozzle 22, a lower end structure in the form of a bottom nozzle 24, and a plurality of elongate members in the form of tubular posts 26 extending longitudinally between the top and bottom nozzles 22, 24 and rigidly interconnecting them.

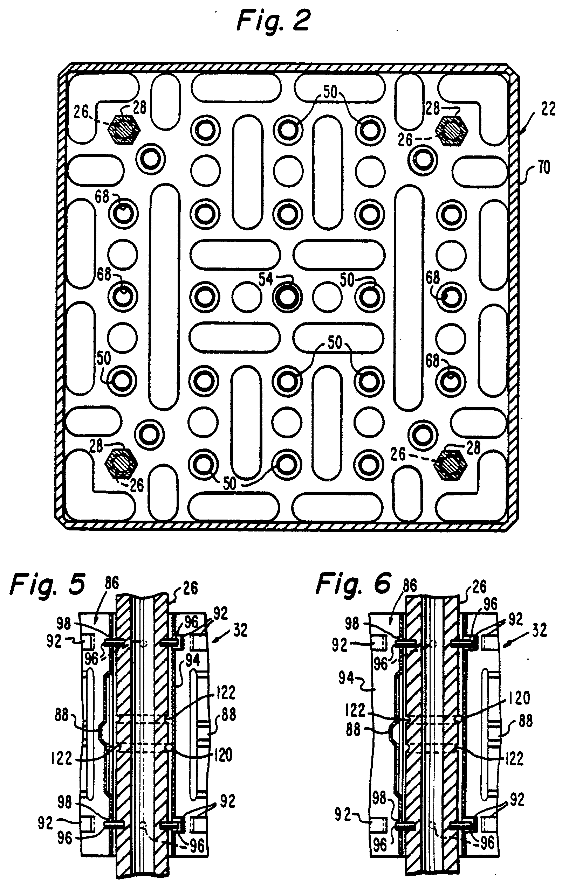

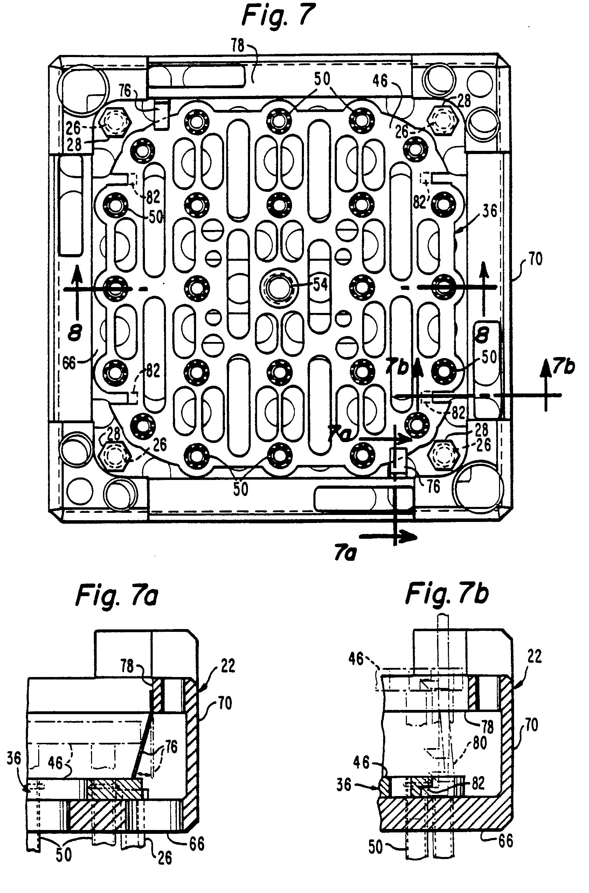

Referring also to Figures 2 and 7, the tubular posts 26, preferably four in number, have internally threaded upper and lower end portions which are releasably connected to respective corner regions of the top and bottom nozzles 22, 24 by means of threaded fasteners, such as bolts 28. In such interconnected arrangement, the top and bottom nozzles 22, 24 together with the elongated corner posts form a rigid structural skeleton of the fuel assembly 20 which enables the latter to be installed into and removed from the core 30 (Figure 16) of the PWR (not shown) as an integral unit. On the other hand, this interconnected arrangement permits the top and bottom nozzles 22, 24 and the corner posts 26 to be easily disassembled for total repairability not only of these structural components of the fuel assembly 20 but also of the nonstructural components thereof.

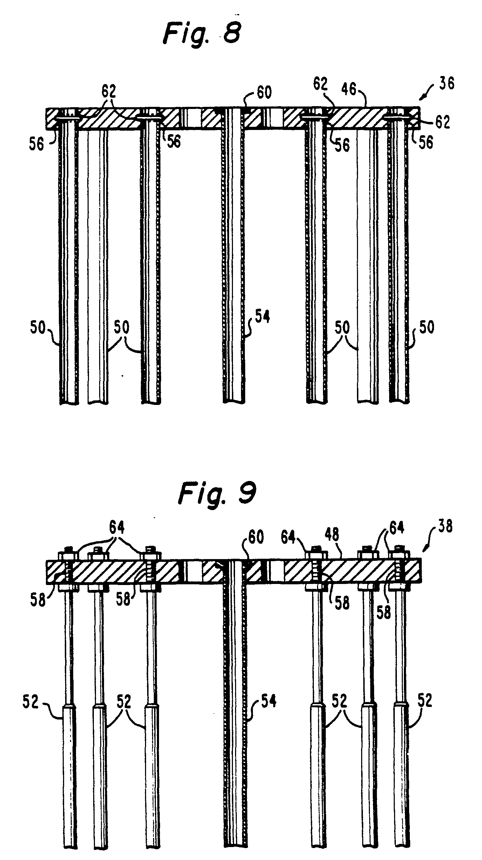

The nonstructural components of the fuel assembly 20 comprise a plurality of transverse grids 32, a plurality of fuel rods 34, and a cluster assembly 36 (Figures 1 and 8) or 38 (Figure 9). While only two different cluster assemblies are disclosed herein, it should be understood that others are possible. The transverse grids 32 are supported on the elongate corner posts 26, in a manner to be described later herein, at axially spaced locations therealong between the top and bottom nozzles 22, 24. The fuel rods 34 extend through and are supported by the grids 32 in substantially parallel spaced relationship with respect to one another and to the corner posts 26.

Each fuel rod 34 contains nuclear fuel pellets of fissile material (not shown), and has its opposite ends closed by means of end plugs 40, 42. Liquid moderator/coolant, such as water, or water containing boron, is pumped upwardly through the fuel assemblies 20 when the reactor core 30 is in operation, in order to extract therefrom heat for the production of useful work.

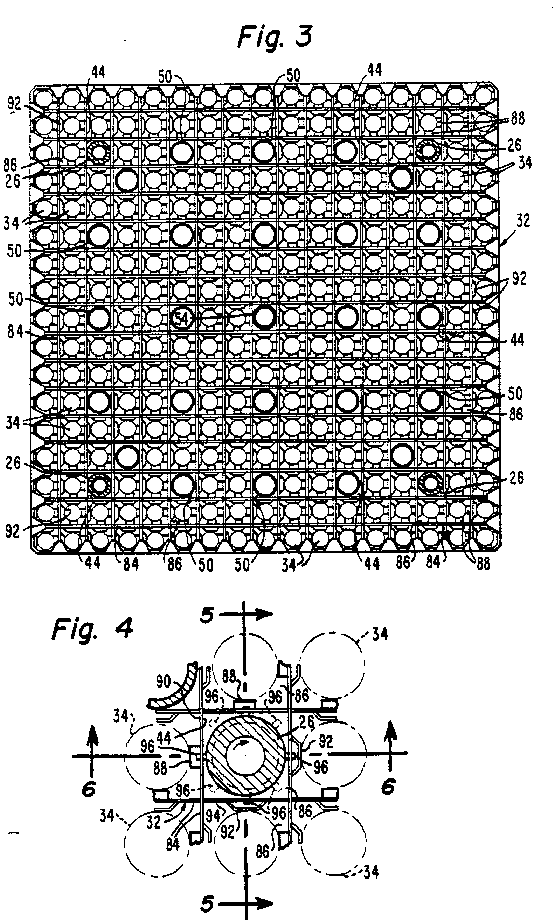

As seen from Figure 3, at specified locations within the array of fuel rods 34 of the improved fuel assembly 20, certain groups of the fuel rods 34 in the plurality thereof are spaced from one another a greater distance than the rest of fuel rods 34 (in effect, within each of these groups the center fuel rod is omitted) so as to define a number of elongate channels 44 extending between the top and bottom nozzles 22, 24. Each cluster assembly 36 or 38 comprises a cluster plate 46 or 48 and different types of elongate rods 54 and 50 or 52 which are connected, at their upper ends, to the respective cluster plate and are insertable through the grids 32 and the channels 44 of the fuel assembly 20.

Specifically, each elongate rod 50 is a guide tube or thimble, each elongate rod 52 is a fuel rod, and each elongate rod 54 is an instrumentation tube. Each of the fuel rods 52 of the cluster assembly 38 (Figure 9) is larger in size (both length and diameter) than any one of the fuel rods 34 supported by the grids 32. Each of the cluster plates 46, 48 has formed therein a plurality of openings 56 or 58, respectively, which are arranged in a pattern matched with that of the channels 44. The central one of the openings 56 or 58 in the respective cluster plate 46 or 48 has disposed therein an upper end portion of the instrumentation tube 54, a flange 60 formed on the latter being secured, e.g. welded, to the cluster plate. Each of the remaining openings 56 in the cluster plate 46 has an annular groove 62 formed in the wall thereof, and has inserted therein an upper end portion of the associated guide thimble 50 which is rigidly connected to the cluster plate 46 by having a bulge formed therein to mate with the groove 62. The remainder of the openings 58 in the cluster plate 48 have upper end portions of the oversized fuel rods 52 extending therethrough, which upper end portions of the rods 52 are secured to the plate 48 by means of fasteners 64.

As mentioned above, each of the cluster assemblies 36, 38 is adapted for insertion into the fuel assembly 20. More particularly, the top nozzle 22 is adapted to removably support the cluster plate 46 or 48 of either cluster assembly 36 or 38 in a manner such that its rods 54 and 50 or 52 extend from the top nozzle 22 through the elongate channels 44 and toward the bottom nozzle 24 which is adapted to removably support the rods of either cluster assembly 36 or 38 at their lower ends.

For supporting either of the cluster assemblies 36, 38, the top nozzle 22 includes a lower transverse adapter plate 66 having a plurality of holes 68 formed therein in a pattern matched with that of the elongate channels 44 in the fuel assembly and of the elongate rods of each cluster assembly. The top nozzle 22 also has an upright sidewall 70 extending upwards from the periphery of the adapter plate. When the cluster plate 46 or 48 of either cluster assembly 36 or 38 is supported on the adapter plate 66 in an installed position, such as shown in Figures 1 and 7, and as shown in solid lines in Figures 7a and 7b, the rods 54 and 50 or 52 thereon extend downwardly through the holes 68 in the adapter plate 66 and through the channels 44 toward the bottom nozzle 24. As also seen from Figure 1, holes 72 in a transverse plate 74 of the bottom nozzle 24 are arranged in a corresponding pattern to removably receive and support the lower ends of the rods 54 and 50 or 52 of the respective cluster assembly 36 or 38.

Mounted on an inwardly directed upper flange 78 on the sidewall 70 of the top nozzle 22, and adjacent two diagonal ones of its corners, are latch means in the form of a pair of leaf springs 76 adapted to cooperate with the cluster plate 46 or 48 of either cluster assembly 36 or 38 so as to retain it in its installed position on the adapter plate 66. For example, in Figures 1, 7 and 7a, one of the leaf springs 76 is shown in its normal locking position in which it extends downwardly toward and into engagement with the upper surface of cluster plate 46. By using a suitable tool (not shown), the leaf spring 76 can be deflected laterally to an unlocking position, as seen in phantom outline in Figure 7a, in which the spring no longer engages the upper surface of the cluster plate 46 and therefore enables the cluster assembly to be removed by means of a suitable tool (see Figure 7b) having hooks 80 which can be engaged with undercut notches 82 formed in the cluster plate 46 near opposite diagonal corners thereof, and then used to lift the plate 46 from its installed position on the adapter plate 66, as indicated in phantom outline in Figure 7b.

As seen from Figures 2 and 7, the upper ends of the posts 26, as represented by the bolts 28, are located in the corner regions of the adapter plate 66 and just beyond the perimeter of the cluster plate 46, when installed. Figures 2 and 7 also show the coolant flow openings formed in the adapter plate 66 and the cluster plate 46.

Referring now to Figures 3 to 6, the grid 32 shown therein as representative of all of the grids 32 is composed of a plurality of interleaved straps 84 arranged in an egg-crate configuration so as to define a plurality of open cells 86. Whilst there are 289 cells in the illustrated embodiment, with seventeen cells along each edge of the grid, other array sizes can be used in the fuel assembly and, therefore, the locations of the posts 26 and rods 50, 52 in the cells 86 of the grid 32 may vary. Each one of the cells 86 having a fuel rod 34 extending therethrough contains a pair of yieldable springs 88 defined respectively on one pair of adjacent walls 90 of the cell and a pair of dimples 92 defined respectively on each wall of the other pair of adjacent walls 94. However, none of the cells 86 having one of the corner posts 26 or one of the elongate rods 50, 52, 54 through it contains such springs 88 or dimples 92. These latter cells 86, being twenty-nine in number, are aligned with the elongate channels 44 of the fuel assembly 20, and they house tubular components which are larger in diameter than the fuel rods 34.

Whilst the various types of rods associated with the respective cluster assemblies, namely, the guide thimbles 50, the oversized fuel rods 52, and the instrumentation tubes 54, do not require any features within the grid cells 86 to support them, the grids themselves rely upon the corner posts 26 for their support so that some feature must be provided to serve this function. As depicted in Figures 4 to 6, each of the corner posts 26 has interfitting means in the form of four pairs of tabs 96 which project radially outward from the post and are arranged so as to be alignable and engageable with complementary interfitting means in the form of openings behind the dimples 92 (see Figure 4) on, or holes 98 in, the walls 90, 94 of the respective cell 86 accommodating the post 26.

In order to install the grid 32 on a corner post 26, the post is first rotated about its longitudinal axis to a position in which its tabs 96 are aligned with the corners of the cell 86, as shown in phantom outline in Figure 4, and where they will not interfere with any structure when the grid is slipped over the post and moved therealong to its desired position. Then when the grid 32 is positioned such that the dimples 92 and holes 98 are in a common plane with the tabs 96 on the post 26, the latter is rotated forty-five degrees from the initial position thereof whereby its tabs 96, as shown in solid outline in Figure 4 and as seen in Figures 5 and 6, are engaged respectively in the openings behind the dimples 92 and in the holes 98 of the grid walls, thus retaining the grid 32 in its proper position.

From the preceding description it will be readily apparent how easily the fuel assembly 20 can be disassembled for repairs or any other purpose due to the releasable fastening of the upper and lower ends of the corner posts 26 to the top and bottom nozzles 22, 24, the manner in which the posts 26 removably support the grids 32, and the releasable support of either cluster assembly 36 or 38 on the adapter plate 66 of the top nozzle 22.

Fuel Rod Cluster Interchange

As described above, the fuel assembly embodying the invention facilitates the use of different cluster assemblies in different fuel assemblies. In the illustrated embodiment, two different cluster assemblies are shown, namely, the cluster. assembly 36 (Figure 8) including the control-rod guide thimbles 50 and thus adapted for use in a fuel assembly which, when in a reactor core, will be located where there are control rods to be accommodated in guide thimbles, and the cluster assembly 38 (Figure 9) including the oversized fuel rods 52 and thus adapted for use in a fuel assembly which, when in a reactor core, will be located where there are no control rods so that the channels, such as channels 44, in the fuel assembly remain available for receiving the fuel rods 52.

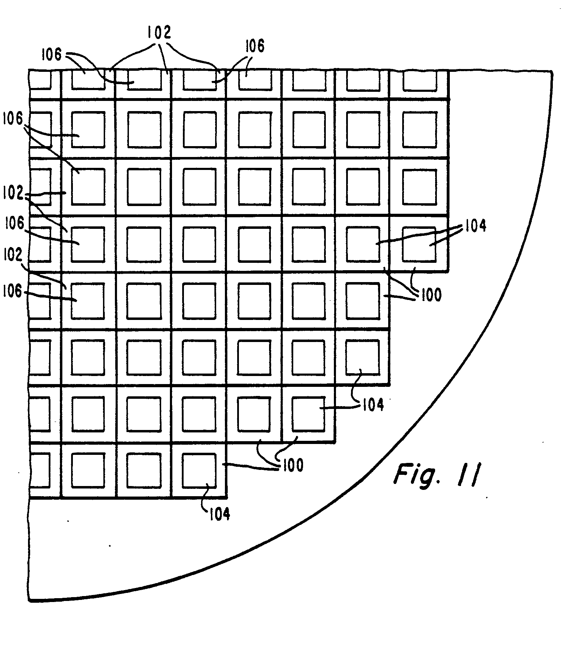

Not only can cluster assemblies, such as the assembly 38, be utilized to add fuel rods where there are empty channels 44 for receiving them, they also make it readily possible for the concentration of fuel in one cluster assembly 38 to be different from that in another, as illustrated in Figure 11. Thus, there is shown in the latter a first plurality of fuel assemblies 100 each of which contains an array of ordinary fuel rods, such as the fuel rods 34 in Figure 1, containing fresh fuel. Then there is a second plurality of fuel assemblies 102 each containing an ordinary array of fuel rods with burnt fuel. Assuming each of the fuel assemblies 100 and 102 to have the construction according to the invention as previously described herein, the use of fuel-rod cluster assemblies, such as the assembly 38, which are readily removable from the top nozzles of the fuel assemblies will greatly facilitate the reshuffling of cluster assemblies during refueling of the reactor core 30. Thus, cluster assemblies 104 containing burnt fuel can be relocated from fuel assemblies 102, which likewise contain burnt fuel, to the fuel assemblies 100 with fresh fuel. Similarly, cluster assemblies 106 which have fresh fuel can be installed into fuel assemblies 102 which contain burnt fuel.

Therefore, instead of the ordinary practice of loading into a reactor core a fuel assembly containing only fresh fuel rods or only burnt fuel rods, the arrangement disclosed herein makes feasible a new fuel loading scheme, namely, using a cluster assembly with fresh fuel in a burned fuel assembly, and using a cluster assembly with burned fuel in a fresh fuel assembly. Increased productivity results from this new fuel loading scheme in terms of lower fuel cycle costs, longer burned-fuel assembly life, and increased capacity for longer cycles.

**Claims**

1. A nuclear fuel assembly comprising an upper end structure (22), a lower end structure (24), interconnecting means (26) connecting the upper and lower end structures to each other and, together therewith, forming a structurally rigid skeleton, a plurality of transverse grids (32) supported on said skeleton at longitudinally spaced locations between the end structures, and a plurality of fuel rods (34) extending through the transverse grids and supported thereby in a predetermined array and in parallel spaced relationship with respect to each other, characterized in that

said interconnecting means comprise elongate non-fuel and non-guide-thimble structural members (26) in the form of connecting posts extending between said upper and lower end structures (22, 24) and having opposite end portions thereof connected thereto;

said fuel rods (34) are arranged such as to leave in said arrays a predetermined number of spaces devoid of fuel rods and guide thimbles and defining longitudinal channels (44) which extend between the end structures and are interspersed among the fuel rods in a predetermined pattern; and

the fuel assembly includes a cluster assembly (36, 38) comprising a support member. (46, 48) and a plurality of elongate elements (50, 45, 52, 54) which includes control rod guide thimbles and/or fuel rods connected, each at one end thereof, to said support member and extending therefrom in parallel spaced relationship with respect to each other, said elongate elements having cross-sectional dimensions such as to fit into the respective longitudinal channels (44) and being arranged in a pattern corresponding to said predetermined pattern of the longitudinal channels, said support member (46, 48) being cooperable with a portion (66) of said upper end structure (22) so as to removably support the cluster assembly (36, 38) therefrom in a manner such that each of said elongate elements extends into one of said channels (44) and longitudinally therein toward said lower end structure (24).

2. A nuclear fuel assembly according to claim 1, characterized in that at least some of said fuel rods (52) contain burnt nuclear fuel.

3. A nuclear fuel assembly according to claim 1, characterized in that at least some of said fuel rods (52) contain fresh nuclear fuel.

4. A nuclear fuel assembly according to claim 1, 2 or 3, characterized in that each of said elongate elements constituting a fuel rod (52) is larger in size than any of the fuel rods (34) supported by said traverse grids (32).

5. A nuclear fuel assembly according to any one of the preceding claims, characterized in that said elongate elements include an instrumentation tube (54).

6. A nuclear fuel assembly according to any one of the preceding claims, characterized in that said upper end structure (22) includes latching means (76) cooperable with said support member (46, 48) of the cluster assembly (36, 38) so as to releasably retain the latter in position upon the upper end structure, said latching means being defeatable so as to release the cluster assembly for removal thereof.

7. A nuclear fuel assembly according to claim 6, characterized in that said latching means (76) comprises at least one leaf spring so disposed on the upper end structure as first to be cammed resiliently aside by the support member (46, 48) of the cluster assembly (36, 38) and then to snap into latching engagement therewith as the cluster assembly is being mounted in position upon the upper end structure.

8. A nuclear fuel assembly according to any one of the preceding claims, characterized in that said portion (66) of the upper end structure (22) is a plate having formed therein a plurality of openings (68) each disposed in axial alignment with one of said longitudinal channels (44), said support member (46, 48) of the cluster assembly (36, 38) comprising a plate which is seated upon said plate (66) of the upper end structure, with said elongate elements (50, 54, 52, 54) extending through the respective ones of said openings (68).

9. A nuclear fuel assembly according to any one of the preceding claims, characterized in that said lower end structure (24) removably supports the elongate elements (50, 54, 52, 54) of said cluster assembly (36, 38) at the lower ends thereof.

10. A nuclear fuel assembly according to any one of the preceding claims, characterized in that said grids (32) include first interlocking means (92, 98), and the elongate members (26) constituting said interconnecting means include second interlocking means (96) cooperable with said first interlocking means to releasably fasten the respective grids (32) to said elongate members (26).

11. A nuclear fuel assembly according to claim 10, characterized in that each of said grids (32) is an egg-crate-like structure defining a plurality of open-ended and substantially rectangular cells (86) for the respective fuel rods (34), elongate members (26), and elongate elements (50, 54, 52, 54) to extend therethrough, said first interlocking means (92, 98) comprising openings formed in wall portions of each cell (86) having one of the elongate members (26) extending therethrough, and said second interlocking means (96) comprising radial projections (96) disposed on each elongate member (26) and so arranged thereon as to be movable into and from locking engagement with the associated interlocking openings through partial rotation of the elongate member about its longitudinal axis.

12. A nuclear fuel assembly according to claim 11, characterized in that each of said elongate members (26) has said opposite end portions thereof releasably connected to the respective end structures (22, 24), each elongate member (26), when released from said end structures and rotated to disengage the second interlocking means (96) thereon from the associated first interlocking means (92, 98), being removable from said skeleton.

13. A nuclear fuel assembly according to any one of the preceding claims, characterized in that said elongate members (26) are corner posts disposed adjacent respective corners of said skeleton.

14. A nuclear fuel assembly according to any one of the preceding claims, characterized in that said elongate members (26) are tubular.

**Patentansprüche**

1. Kernbrennelement mit einer oberen Endkonstruktion (22), einer unteren Endkonstruktion (24), diese miteinander verbindenden Verbindungsmitteln (26) zur Herstellung eines eigensteifen Skeletts, einer Mehrzahl querverlaufender, auf dem Skelett an in Längsrichtung zwischen den Endkonstruktionen auseinanderliegende Stellen gehalterten Haltegittern (32), und einer Vielzahl von durch die Haltegitter hindurchverlaufenden und von diesen in vorgegebener paralleler Anordnung mit gegenseitigen Abständen gehalterten Brennstäben (34), dadurch gekennzeichnet, daß

die Verbindungsmittel langgestreckte brennstoffreie und nicht als Führungsrohre dienende Konstruktionsteile (26) in Form von Verbindungssäulen aufweisen, die zwischen oberer und unterer Endkonstruktion (22, 24) verlaufen und mit ihren entgegengesetzten Enden damit verbunden sind,

die Brennstäbe (34) so angeordnet sind, daß in der genannten Anordnung eine vorgegebene Anzahl von brennstab- und führungsrohrfreien Zwischenräumen freibleiben, die zwischen den Endkonstruktionen verlaufende Längskanäle (44) bilden und in einem vorgegebenen Muster zwischen den Brennstäben angeordnet sind, und

das Brennelement eine Mehrfachbaugruppe (36, 38) mit einem Halteteil (46, 48) und einer Mehrzahl länglicher Elemente (50, 45, 52, 54) aufweist, die Steuerstabführungsrohre und/oder Brennstäbe umfassen, die jeweils mit ihrem einen Ende am Halteteil befestigt sind und von diesem parallel zueinander wegragen, wobei die länglichen Elemente solche Querschnittsabmessungen haben, daß sie in die betreffenden länglichen Kanäle (44) hineinpassen, und in einem dem vorgegebenen Muster länglicher Kanäle entsprechenden Muster angeordnet sind, und wobei das Halteteil (46, 48) mit einem Teil (46) der oberen Endkonstruktion (22) so in Zusammenwirkung bringbar ist, daß er die Mehrfachbaugruppe (36, 38) daran in einer solchen Weise abnehmbar haltert, daß jedes der genannten länglichen Elemente in einen der genannten Kanäle (44) hinein und darin in Längsrichtung zur unteren Endkonstruktion (24) hin ragt.

2. Kernbrennelement nach Anspruch 1, dadurch gekennzeichnet, daß mindestens einige der Brennstäbe (52) abgebrannten Kernbrennstoff enthalten.

3. Kernbrennelement nach Anspruch 1, dadurch gekennzeichnet, daß mindestens einige der Brennstäbe (52) frischen Kernbrennstoff enthalten.

4. Kernbrennelement nach Anspruch 1, 2 oder 3, dadurch gekennzeichnet, daß jedes der länglichen Elemente, das einen Brennstab (52) bildet, größer als die von den Haltegittern (32) gehalterten Brennstäbe (34) ist.

5. Kernbrennelement nach einem der vorhergehenden Ansprüche, dadurch gekennzeichnet, daß die länglichen Elemente ein Instrumentierungsrohr (54) enthalten.

6. Kernbrennelement nach einem der vorhergehenden Ansprüche, dadurch gekennzeichnet, daß die obere Endkonstruktion (22) Verriegelungsmittel (76) aufweist, die mit dem Halteteil (46, 48) der Mehrfachbaugruppe (36, 38) in Zusammenwirkung bringbar ist, um die letztere lösbar in ihrer Position an der oberen Endkonstruktion zu halten, und daß die Verriegelungsmittel so unwirksam machbar sind, daß sie die Mehrfachbaugruppe zu deren Ausbau freigeben.

7. Kernbrennelement nach Anspruch 6, dadurch gekennzeichnet, daß die Verriegelungsmittel (76) mindestens eine Blattfeder aufweisen, die so auf der oberen Endkonstruktion angeordnet ist, daß sie bei der Montage der Mehrfachbaugruppe in ihrer Position auf der oberen Endkonstruktion zunächst durch das Halteteil (46, 48) der Mehrfachbaugruppe (36, 38) elastisch beiseite gedrückt wird und dann in arretierenden Eingriff damit einschnappt.

8. Kernbrennelement nach einem der vorhergehenden Ansprüche, dadurch gekennzeichnet, daß der genannte Teil (66) der oberen Endkonstruktion (22) eine Platte ist, in welcher eine Mehrzahl von Öffnungen (68) gebildet ist, die jeweils axial fluchtend mit einem der genannten länglichen Kanäle (44) angeordnet sind, und daß das Halteteil (46, 48) der Mehrfachbaugruppe (36, 38) eine Platte aufweist, die auf der genannten Platte (66) der oberen Endkonstruktion aufsitzt, wobei die länglichen Elemente (50, 54, 52, 54) durch die betreffenden Öffnungen (68) hindurchragen.

9. Kernbrennelement nach einem der vorhergehenden Ansprüche, dadurch gekennzeichnet, daß die untere Endkonstruktion (24) die länglichen Elemente (50, 54, 52, 54) der Mehrfachbaugruppe (36, 38) die länglichen Elemente an deren unteren Enden abnehmbar haltert.

10. Kernbrennelement nach einem der vorhergehenden Ansprüche, dadurch gekennzeichnet, daß die Haltegitter (32) erste Eingriffsmittel (92, 98) aufweisen und die länglichen Bauteile (26), welche die genannten Verbindungsmittel bilden, zweite Eingriffsmittel (96) aufweisen, die mit dem ersten Eingriffsmitteln zusammenwirken, um die Haltegitter (32) an den länglichen Bauteilen (26) zu befestigen.

11. Kernbrennelement nach Anspruch 10, dadurch gekennzeichnet, daß jedes der Haltegitter (32) als eierkistenartige Konstruktion ausgebildet ist, die eine Vielzahl von an ihren Enden offenen und etwa rechteckigen Zellen (86) für die Brennstäbe (34), die länglichen Bauteile (26), und die länglichen Elemente (50, 54, 52, 54) bilden, damit diese hindurchverlaufen können, und daß die ersten Eingriffsmittel (92, 98) Öffnungen in Wandteilen jeder Zelle (86), durch welche eines der länglichen Bauteile hindurchverläuft, und die zweiten Eingriffsmittel (96) an jedem länglichen Bauteil (26) gebildete Radialvorsprünge (96) aufweisen, die so angeordnet sind, daß sie durch teilweise Drehung des länglichen Bauteils um dessen Längsachse in und außer Arretierungseingriff mit den zugehörigen Eingriffsöffnungen bringbar sind.

12. Kernbrennelement nach Anspruch 11, dadurch gekennzeichnet, daß die länglichen Bauteile (26) mit ihren entgegengesetzten Endteilen jeweils lösbar mit den Endkonstruktionen (22, 24) verbunden sind und jedes längliche Bauteil (26), wenn es von den Endkonstruktionen gelöst und so gedreht ist, daß seine zweiten Eingriffsmittel (96) von den zugehörigen ersten Eingriffsmitteln (92, 98) außer Eingriff gebracht sind, aus dem Skelett herausnehmbar ist.

13. Kernbrennelement nach einem der vorhergehenden Ansprüche, dadurch gekennzeichnet, daß die länglichen Bauteile (26) Ecksäulen sind, die an den Ecken des Skeletts angeordnet sind.

14. Kernbrennelement nach einem der vorhergehenden Ansprüche, dadurch gekennzeichnet, daß die länglichen Bauteile (26) rohrförmig sind.

**Revendications**

1. Assemblage combustible nucléaire comportant une structure d'extrémité supérieure (22), une structure d'extrémité inférieure (24), des moyens d'interconnexion (26) connectant les structures d'extrémité supérieure et inférieure l'une à l'autre, et, avec ceux-ci, formant un squelette rigide structurellement, une pluralité de grilles transversales (32) supportées sur ledit squelette en des emplacements longitudinalement espacés entre les structures d'extrémité, et une pluralité de barres de combustible (34) s'étendant à travers les grilles transversales et supportées par celles-ci en un groupement prédéterminé et en relation d'espacement parallèle les unes par rapport aux autres, caractérisé en ce que

lesdits moyens d'interconnexion comportent des éléments structuraux allongés (26) sans combustible et sans tube de guidage sous la forme de montants de connexion s'étendant entre lesdites structures d'extrémité supérieure et inférieure (22, 24) et ayant leurs parties d'extrémité opposées connectées à celles-ci;

lesdites barres de combustible (34) sont disposées de façon à laisser dans lesdits groupements un nombre prédéterminé d'espaces vides de barres de combustible et de tubes de guidage et définissant des canaux longitudinaux (44) qui s'étendent entre les structures d'extrémité et qui sont répartis parmi les barres de combustible selon un motif prédéterminé; et

l'assemblage combustible comporte un ensemble de grappe (36, 38) comportant un élément de support (46, 48) et une pluralité d'éléments allongés (50, 54, 52, 54) qui comportent des tubes de guidage de barres de commande et/ou des barres de combustible connectés, chacun à une de leurs extrémités, audit élément de support, et s'étendant à partir de celui-ci en relation espacée parallèle les uns par rapport aux autres, lesdits éléments allongés ayant des dimensions de section tranversale telles qu'ils s'adaptent dans les canaux longitudinaux respectifs (44) et étant disposés selon un motif correspondant audit motif prédéterminé des canaux longitudinaux, ledit élément de support (46, 48) pouvant coopérer avec une partie (56) de ladite structure d'extrémité supérieure (22) pour supporter de façon amovible l'ensemble de grappe (36, 38) à partir de cette structure, d'une manière telle que chacun desdits éléments allongés s'étende dans l'un desdits canaux (44) et longitudinalement à l'intérieur de celui-ci vers ladite structure d'extrémité inférieure (24).

2. Assemblage combustible nucléaire selon la revendication 1, caractérisé en ce qu'au moins quelques-unes desdites barres de combustible (52) contiennent du combustible nucléaire usé.

3. Assemblage combustible nucléaire selon la revendication 1, caractérisé en ce qu'au moins quelques-unes desdites barres de combustible (52) contiennent du combustible nucléaire neuf.

4. Assemblage combustible nucléaire selon la revendication 1, 2 ou 3, caractérisé en ce que chacun desdits éléments allongés constituant une barre de combustible (52) a une taille supérieure à celle de n'importe laquelle des barres de combustibles (34) supportées par lesdites grilles transversales (32).

5. Assemblage combustible nucléaire selon l'une quelconque des revendications précédentes, caractérisée en ce que lesdits éléments allongés comportent un tube d'instrumentation (54).

6. Assemblage combustible nucléaire selon l'une quelconque des revendications précédentes, caractérisé en ce que ladite structure d'extrémité supérieure (22) comporte des moyens de verrouillage (76) pouvant coopérer avec ledit élément de support (46, 48) de l'ensemble de grappe (36, 38) pour maintenir de façon libérable ce dernier en place sur la structure d'extrémité supérieure, lesdits moyens de verrouillage pouvant être retirés de façon à libérer l'ensemble de grappe pour le retrait de celui-ci.

7. Assemblage combustible nucléaire selon la revendication 6, caractérisé en ce que lesdits moyens de verrouillage (76) comportent au moins un ressort à lame disposé sur la structure d'extrémité supérieure de façon à être tout d'abord repoussé élastiquement sur le côté par l'élément de support (46, 48) de l'ensemble de grappe (36, 38) puis ensuite à s'encliqueter en relation de verrouillage avec celui-ci lorsque l'on monte l'ensemble de grappe en position sur la structure d'extrémité supérieure.

8. Assemblage combustible nucléaire selon l'une quelconque des revendications précédentes, caractérisé en ce que ladite partie (66) de la structure d'extrémité supérieure (22) est une plaque dans laquelle est formée une pluralité d'ouvertures (68) disposées chacune en alignement axial avec l'un desdits canaux longitudinaux (44), ledit élément de support (46, 48) de l'ensemble de grappe (36, 38) comportant une plaque qui s'appuie sur ladite plaque (66) de la structure d'extrémité supérieure, lesdits éléments allongés (50, 54, 52, 54) s'étendant à travers les ouvertures respectives desdites ouvertures (68).

9. Assemblage combustible nucléaire selon l'une quelconque des revendications précédentes, caractérisé en ce que ladite structure d'extrémité inférieure (24) supporte de façon amovible les éléments allongés (50, 54, 52, 54) dudit ensemble de grappe (36, 38) à leurs extrémités inférieures.

10. Assemblage combustible nucléaire selon l'une quelconque des revendications précédentes, caractérisé en ce que lesdites grilles (32) comportent des premiers moyens d'enclenchement (92, 98), et en ce que les éléments allongés (26) constituant lesdits moyens d'interconnexion comportent des deuxièmes moyens d'enclenchement (96) pouvant coopérer avec lesdits premiers moyens d'enclenchement pour fixer de façon amovible les grilles respectives (32) auxdits éléments allongés (26).

11. Assemblage combustible nucléaire selon la revendication 10, caractérisé en ce que chacune desdites grilles (32) est une structure alvéolée définissant une pluralité de cellules (86) à extrémité ouverte et substantiellement rectangulaires pour que les barres de combustible (34), les éléments allongés (26), et les éléments allongés (50, 54, 52, 54) respectifs s'étendent à travers celles-ci, lesdits premier moyens d'enclenchement (92, 98) comportant des ouvertures formées dans les parties de parois de chaque cellule (86) à travers laquelle s'étend un des éléments allongés (26), et lesdits deuxièmes moyens d'enclenchement (96) comportant des saillies radiales (96) disposées sur chaque élément allongé (26) et disposées sur ceux-ci de façon à pouvoir être bloqués dans les ouvertures d'enclenchement associées et à en être débloquées, grâce à la rotation partielle de l'élément allongé autour de son axe longitudinal.

12. Assemblage combustible nucléaire selon la revendication 11, caractérisé en ce que chacun desdits éléments allongés (26) a ses parties d'extrémité opposées qui sont connectées de façon libérable aux structures d'extrémité respectives (22, 24), chaque élément allongé (26), lorsqu'il a été libéré desdites structures d'extrémité et a été tourné pour dégager les deuxièmes moyens d'enclenchement (96) qu'il comporte des premiers moyens d'enclenchement associés (92, 98), pouvant être retiré dudit squelette.

13. Assemblage combustible nucléaire selon l'une quelconque des revendications précédentes, caractérisé en ce que lesdits éléments allongés (26) sont des montants d'angle disposés au voisinage des coins respectifs dudit squelette.

14. Assemblage combustible nucléaire selon l'une quelconque des revendications précédentes, caractérisé en ce que lesdits éléments allongés (26) sont tubulaires.

Fig. 1

*Fig. 2*

*Fig. 5*

*Fig. 6*

## Fig. 3

## Fig. 4

## Fig. 7

## Fig. 7a

## Fig. 7b

4

# Fig. 8

# Fig. 9

# Fig. 10

Fig. II